# EUROPEAN PATENT APPLICATION

(11) **EP 1 643 418 A2**
(43) Date of publication of application: **05.04.2006**
(21) Application number: 05021270.3
(22) Date of filing: 29.09.2005
(51) Int. Cl.: G06K 15/12, G03G 15/00

(54) **Image forming apparatus**

(30) Priority: 29.09.2004 JP 2004283932
(71) Applicant: SEIKO EPSON CORPORATION, Shinjuku-ku, Tokyo 163-0811 (JP)
(72) Inventor: Sugita, Takatoshi, Suwa-shi Nagano-ken 392-8502 (JP)
(74) Representative: HOFFMANN EITLE

(57) **Abstract**

A printer controller converts image data received from the external device into image information. An engine controller causes a print engine to perform the printing in accordance with the image information, and communicates data regarding a status of the print engine with the print controller by a serial communication. The printer controller and the engine controller perform an activation sequence including an operation for stabilizing circuits provided therein. The engine controller performs an initializing operation for placing the print engine in a printable condition after the completion of the activation sequence. The printer controller periodically transmits first data inquiring the status of the print engine to the engine controller during the initializing operation. The engine controller is configured to transmit second data indicating the status of the print engine to the printer controller in response to the first data. The engine controller is configured to spontaneously transmit third data indicating that a change is occurred in the status of the print engine to the printer controller after the completion of the initializing operation.

## Description

### BACKGROUND OF THE INVENTION

The present invention relates to an image forming apparatus, and more particularly, to serial communication via an interface between a printer controller and an engine controller (hereinafter called a "video interface"), both controllers belonging to the image forming apparatus.

An image forming apparatus, such as a laser beam printer, generally has two controllers, a printer controller and an engine controller. The controller performs receipt of image data from an external device, such as a personal computer, and expansion of the thus-received image data into printable data, as well as exchanging a variety of signals with the engine controller, and performing serial communication. The engine controller controls respective units, such as a developing unit, an exposure unit, an image carrier unit, a fusing unit, of a print engine through exchange of a variety of signals and serial communication with the printer controller.

Meanwhile, the printer controller must recognize the current status of each of the respective units of the print engine. For instance, when the status of the print engine is unknown, an instruction to start printing cannot be provided to the engine controller. This status is ascertained by the engine controller. Accordingly, the printer controller acquires the status from the engine controller. This acquisition is performed through serial communication.

In a related-art image forming apparatus, a printer controller acquires a status from an engine controller as follows: the printer controller periodically issues a status request to the engine controller through serial communication; and in response to the status request, the engine controller returns a current status.

However, the time at which a status changes and manner in which a status changes cannot be predicted. For instance, a user sometimes opens a main body cover of an image forming apparatus for replacement of a toner cartridge, or the like. When the cover is opened, the status is to be changed; however, the time of occurrence of such a status change cannot be predicted. To this end, in the related-art, the printer controller periodically issues a status request to the engine controller. However, since the time at which a status change will occur cannot be predicted, the interval between issuances of a status request must be shortened, thereby increasing the number of serial communication operations between the printer controller and the engine controller. Consequently, serial communication has imposed a significantly large load on the printer controller and the engine controller.

To this end, a method disclosed in Japanese Patent Publication No. 9-277667A has decreased the number of communication operations and reduced the load imposed on the printer controller and on the engine controller by the serial communication, by the following manner. Namely, when a status change occurs, the engine controller notifies the printer controller of the status change by transmitting a given signal over a video interface (hereinbelow, "interface" is abbreviated as "I/F"). Upon receipt of this notification, the printer controller issues a status request to the engine controller through serial communication.

However, even in a case where the method disclosed in this publication is employed, upon activation of the image forming apparatus, the number of serial communication operations between the printer controller and the engine controller becomes significantly large. Furthermore, the status acquired by the printer controller at this time provides no useful information.

More specifically, when the apparatus is activated, the engine controller performs so-called initialization for bringing each of the units of the print engine into a printable condition. During this initialization, in a case where the image forming apparatus is a so-called four-cycle machine, a variety of procedures are carried out, such as rotating a developing roller to its home position; positioning a photosensitive member to a predetermined phase; heating a fuser to a predetermined temperature; and performing a check as to whether or not an exposure unit works normally. However, during this processing, values of various signals; e.g., outputs from a variety of sensors, change frequently.

These changes in the signals are reflected in status changes; however, according to this publication, every time such a status change occurs, the engine controller transmits a signal notifying the print controller of the status change; and in response thereto, the printer controller issues a status request to the engine controller. As the result, the number of serial communication operations is increased significantly. Furthermore, status changes during initialization have substantially provides no useful information for the printer controller. Eventually, according to this publication, communications providing no useful information are exchanged frequently during initialization at the time of activation, whereby the serial communication between the printer controller and the engine controller imposes a considerably large load.

### SUMMARY OF THE INVENTION

It is therefore an object of the invention to provide an image forming apparatus which, even during initialization at the time of activation, and even after the initialization has completed, can reduce the number of serial communication operations between a printer controller and an engine controller.

In order to achieve the above object, according to the present invention, there is provided an image forming apparatus adapted to be connected with an external device, comprising:
a printer controller, operable to convert image data received from the external device into image information;
a print engine, adapted to perform printing on a printing medium; and
an engine controller, operable to cause the print engine to perform the printing in accordance with the image information, and to communicate data regarding a status of the print engine with the print controller by a serial communication, wherein:
the printer controller and the engine controller perform an activation sequence including,an operation for stabilizing circuits provided therein;
the engine controller performs an initializing operation for placing the print engine in a printable condition after the completion of the activation sequence;
the printer controller periodically transmits first data inquiring the status of the print engine to the engine controller during the initializing operation;
the engine controller is configured to transmit second data indicating the status of the print engine to the printer controller in response to the first data; and
the engine controller is configured to spontaneously transmit third data indicating that a change is occurred in the status of the print engine to the printer controller after the completion of the initializing operation.

By virtue of this configuration, the number of serial communication operations between the printer controller and the engine controller can be reduced as compared with a related-art apparatus.

The engine controller may be configured to spontaneously transmit the second data to the printer controller when the initializing operation is completed.

In this case, the printer controller can recognize the status of the print engine upon the completion of the initializing operation.

The printer controller may be configured to arbitrarily transmit the first data to the engine controller after the completion of the initializing operation.

In this case, the printer controller can recognize the status of the print engine as required, after the completion of the initializing operation.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a block diagram showing an image forming apparatus according to one embodiment of the invention;
Fig. 2 is a time chart showing serial communication between a printer controller and an engine controller in the image forming apparatus;
Fig. 3A is a diagram showing an example bit configuration of a response status issued from the engine controller;
Fig. 38 is a diagram showing an example bit configuration of a spontaneous status issued from the engine controller; and

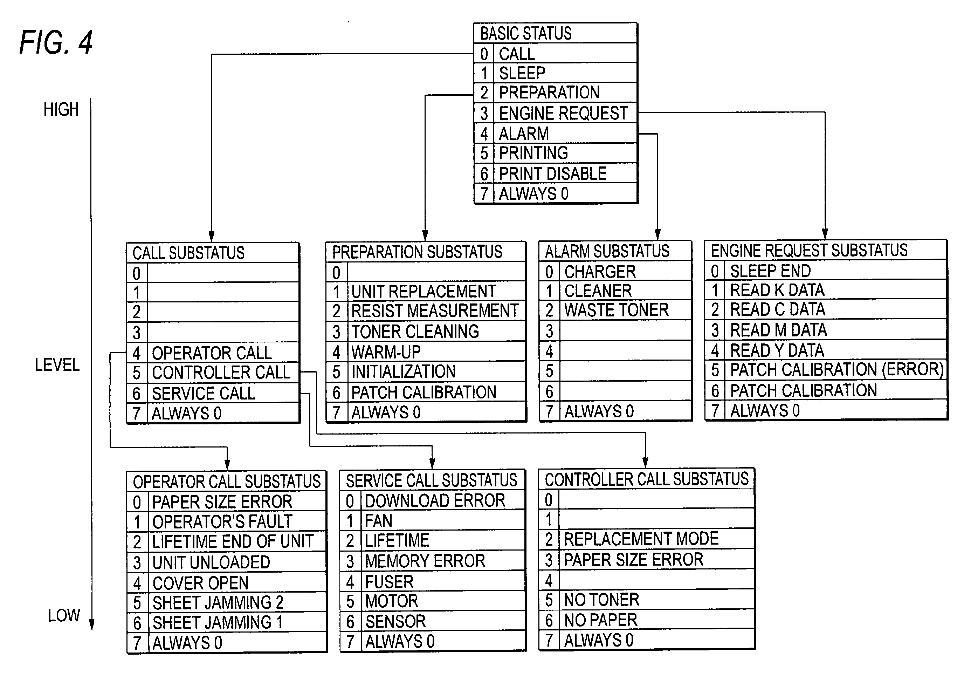

Fig. 4 is a diagram showing an example hierarchical structure of statuses of the image forming apparatus.

### DETAILED DESCRIPTION OF THE EMBODIMENTS

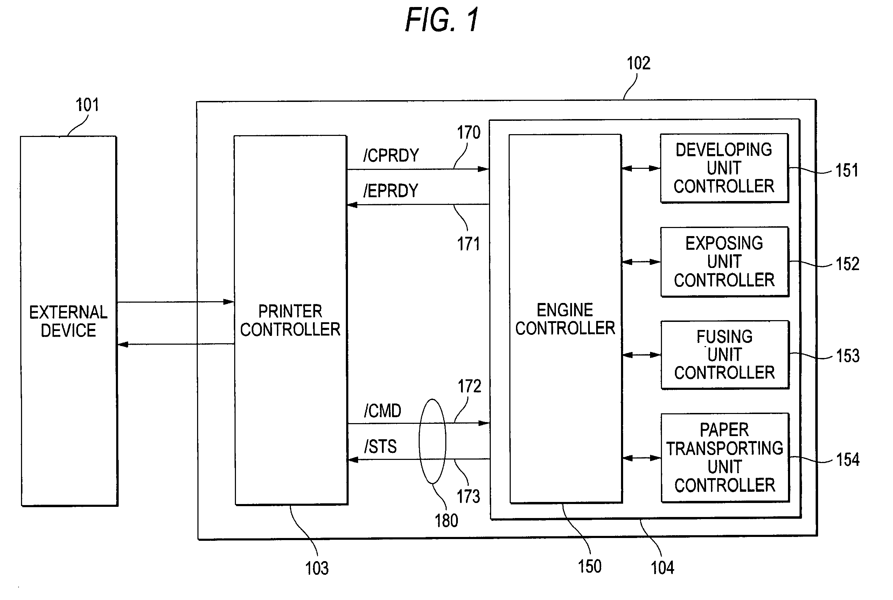

Hereinafter, embodiments of the present invention will be described below in detail with reference to the drawings. Fig. 1 is a block diagram schematically illustrating an image forming apparatus according to the present embodiment. In Fig. 1, the image forming apparatus is configured as a laser beam printer (LBP) 102.

The LBP 102 is connected to an external device 101, such as a host computer, and has a printer controller 103 and a print engine 104. The printer controller 103 is connected to the external device 101, as well as to the print engine 104; more particularly, to an engine controller 150 which will be described later.

The printer controller 103 receives image data, print conditions, and the like, from the external device 101; and converts the thus-received image data into printable image data. In addition, the printer controller 103 transmits the thus-converted printable image data, and the print conditions, such as the number of copies to be printed, to the print engine 104; more particularly, to the engine controller 150, by way of video I/F means having been defined between the print engine 104 and the printer controller 103. Although not illustrated, the printer controller 103 has a CPU, ROM, RAM, an image memory, image-expansion means, I/F means for use with the external device 101, the video I/F means for use with the engine controller 150, and the like.

The print engine 104 has the engine controller 150, units for performing actual printing, and controllers thereof. Among a variety of types of the units for performing printing, and among the control units thereof, Fig. 1 illustrates only four units: a developing unit controller 151, an exposing unit controller 152, a fusing unit controller 153, and a paper transporting unit controller 154 as typical examples. Since these respective unit controllers 151 to 154 are well-known, detailed descriptions thereof are omitted.

Upon receipt of the printable image data and the print conditions from the printer controller 103, the engine controller 150 controls the developing unit controller 151, the exposing unit controller 152, the fusing unit controller 153, and the paper transporting unit controller 154, as well as other unillustrated units, thereby performing printing in accordance with known electrophotographic processing.

Next, video I/F signals between the printer controller 103 and the engine controller 150 will be described.

A /CPRDY (controller power ready) signal 170 is a signal indicating that, after the apparatus is activated and circuit operations of the printer controller 103 are stabilized, thereby achieving a condition in which communication with the engine controller 150 is enabled. The /CPRDY signal 170 is transmitted from the printer controller 103 to the engine control portion 150. An /EPRDY (engine power ready) signal 171 is a signal indicating that, after the apparatus is activated and circuit operations of the engine controller 150 are stabilized, thereby achieving a condition where the engine controller 150 can communicate with the printer controller 103. The /EPRDY signal 171 is transmitted from the engine controller 150 to the printer controller 103.

A /CMD (command) signal 172 is a signal for the print controller 103 to instruct a command to the engine controller 150, and is transmitted from the printer controller 103 to the engine controller 150. Over the video I/F, two types of commands constituted of an execution command and an acquisition command, which will be described in detail later, are transmitted with use of the /CMD signal 172. The execution command is a command for instructing some action, such as an instruction to start printing, to the engine controller 150. The acquisition command is a command for use in obtaining a desired status from the engine controller 150. These two types of commands will be described in detail later.

A /STS (status) signal 173 is a signal indicating an internal status of the print engine 104, and is transmitted from the engine controller 150 to the printer controller 103. In addition, over the video I/F, two types of statuses constituted of a response status and a spontaneous status, which will be described in detail later, are transmitted with use of the /STS signal 173. The response status is a status which, upon receipt of an execution command or an acquisition command from the printer controller 103, is returned to the printer controller 103 as a response to the command. The spontaneous status is a status which is spontaneously transmitted by the engine controller 150 to the printer controller 103.

Meanwhile, in practice, signals to be transmitted from the engine controller 150 to the printer controller 103 over the video I/F include, in addition to the above-mentioned four signals, a signal which requests printing of image data, and a start signal (HSYNC) for a primary scanning line; and signals to be transmitted from the printer controller 103 to the engine controller 150 include signals of image data to be printed. However, Fig. 1 illustrates only minimal signals necessary for describing the invention.

In Fig. 1, signals employed for serial communication between the printer controller 103 and the engine controller 150 are two signals constituted of the /CMD signal 172 and the /STS signal 173, which are enclosed by an oval labeled reference numeral 180. Two other signals; specifically, the /CPRDY signal 170 and the /EPRDY signal 171, are transmitted by way of another signal line different from that for serial communication.

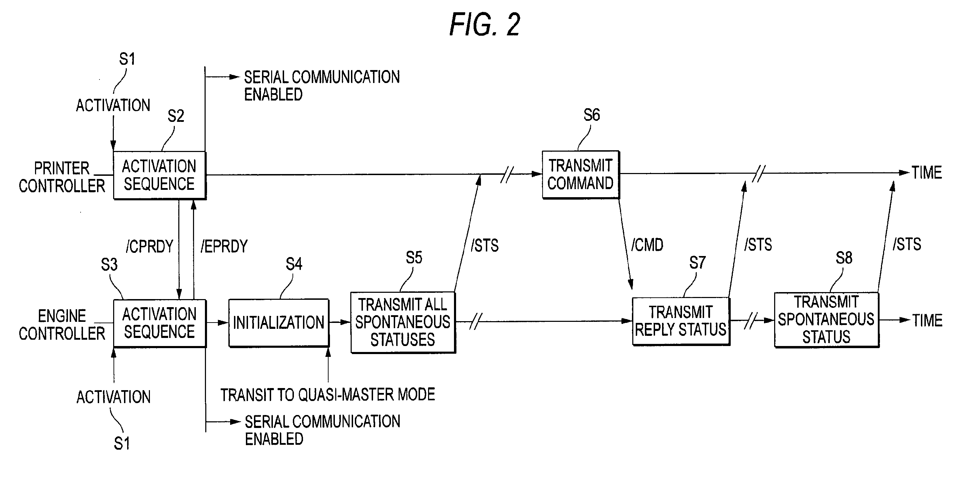

Next, serial communication between the printer controller 103 and the engine controller 150 will be described with reference to a sequence illustrated in Fig. 2.

When the apparatus is activated (step S1), the printer controller 103 and the print engine 104 respectively effect processing in each of activation sequences (steps S2 and S3). The activation sequence in step S2 performed in the printer controller 103 is processing for stabilizing circuit operations of the printer controller 103. In the sequence, checking of the RAM and initial setting of the same, preparations for serial communication with the engine controller 150, and the like, are performed. When the circuit is ascertained to operate with stability, the printer controller 103 transmits to the engine controller 150 the /CPRDY signal 170, thereby terminating the activation sequence in step S2. Upon receipt of the /CPRDY signal 170, the engine controller 150 recognizes that the circuit operations of the printer controller 103 are stabilized, and that the printer controller is in a state where serial communication is enabled.

The activation sequence in step S3 performed in the printer controller 104 is processing for stabilizing circuit operations of the engine controller 150. In the sequence, checking of the RAM and initial setting of the same, preparations for serial communication with the printer controller 103, and the like, are performed. When the circuit is ascertained to operate with stability, the engine controller 150 transmits the /EPRDY signal 171 to the printer controller 103, thereby terminating the activation sequence in step S3. Upon receipt of the /EPRDY signal 171, the printer controller 103 recognizes that the circuit operations of the engine controller 150 are stabilized, and that the engine controller 150 is in a state where serial communication is enabled.

As described above, serial communication between the printer controller 103 and the engine controller 150 is enabled through the respective activation sequences. However, when the activation sequence in step S2 has been completed and serial communication is enabled, the printer controller 103 serves as a master with regard to serial communication, and continues to serve as the master thereafter. Meanwhile, when the activation sequence in step S3 has been completed and serial communication is enabled, the engine controller 150 serves as a slave with regard to serial communication.

When serial communication is enabled, the printer controller 103 issues a status request command at a predetermined interval to the engine controller 150. In response to the command, the engine controller 150 returns a status to the printer controller 130. In other words, serial communication in a master-slave mode is established.

After processing pertaining to the activation sequence in step S3 has been completed, the print engine 104 performs initialization (step S4). This initialization is processing for bringing each of the units of the print engine 104 into a printable condition. When the LBP 102 is a so-called four-cycle machine, a variety of procedures are carried out, such as rotating the developing roller to its home position; positioning the photosensitive member to a predetermined phase; heating the fuser to a predetermined temperature; performing a check as to whether or not the exposure unit works normally; and performing a variety of self diagnoses.

When the initialization in step S4 has been completed, each of the units of the print engine 104 enters a state where operations are performed with stability. In addition, when this initialization has been completed, with regard to serial communication, the engine controller 150 transits from the slave mode to a status where the engine controller 150 can transmit a status spontaneously (called a quasi-master mode, for differentiation from the master of the printer controller 103); and maintains the quasi-master mode thereafter.

When the quasi-master mode is established as a result of completion of initialization pertaining to step S4, the engine controller 150 transmits to the printer controller 103 all the spontaneous statuses with use of the /STS signal 173 (step S5). All the spontaneous statuses referred to here are statuses having been defined such that they can be spontaneously transmitted from the engine controller 150 in this serial communication. The spontaneous statuses will be described later.

Upon receipt of the spontaneous statuses transmitted from the engine controller 150 in this step S5, the printer controller 104 stores the statuses in a memory. As a result, the status of the print engine 103 can be determined. In addition, when the printer controller 103 recognizes that the initialization in step S4 has been completed, on the basis of the spontaneous statuses transmitted from the engine controller 150 in step S5, or on the basis of a response status returned with use of the /STS signal 173 in response to issuance of the /CMD signal 172 (not illustrated in Fig. 2) of a status request, which has been issued to the engine controller 150 before transmission of the spontaneous statuses in step S5, the printer controller 103 recognizes that the engine controller 150 has entered the quasi-master mode with respect to serial communication.

Upon recognition that the engine controller 150 has entered the quasi-master mode, the printer controller 130 stops issuance of the status request command which has been issued at a predetermined interval until then. As a result, serial communication in the master/slave mode having been carried out until then is terminated.

After transmission of all the spontaneous statuses in step S5, when the printer controller 103 must provide an instruction to the engine controller 150 to perform some operation; e.g., to start printing, the printer controller 103 issues an execution command. For obtaining a status of the print engine 104, the printer controller 103 issues an acquisition command (step S6).

In addition, upon receipt of a command from the printer controller 103, the engine controller 150 returns as a response status a status corresponding to the command (step S7). In addition, when any one of the predetermined statuses, having been defined such that they can be transmitted from the engine controller 150 in this serial communication, changes after transmission of the previous response status or the previous spontaneous status, the engine controller 150 transmits to the printer controller 103 the thus-changed status as a spontaneous status with use of the /STS signal 173 (step S8).

Subsequently, upon receipt of the status from the engine controller 150, the printer controller 103 rewrites the status to thus update. By effecting this processing, the printer controller 103 can always recognize the latest status.

As described above, during a period ranging from the time that communication is enabled until completion of initialization in the print engine 104, serial communication between the printer controller 103 and the engine controller 150 is performed in the master/slave mode in which the printer controller 103 serves as the master and the engine controller 150 serves as the slave. Accordingly, the number of serial communication operations during this period can be reduced as compared with the conventional configuration.

More specifically, as described above, during the initialization of the print engine 104, the status changes frequently. According to the related-art method disclosed in Japanese Patent Publication No. 9-277667A, every time the status changes, the engine controller 150 transmits to the printer controller 103 a signal reporting the status change; and in response thereto, the printer controller 103 issues a status request command to the engine controller 150. Accordingly, the number of serial communication operations becomes enormous. In contrast thereto, according to the serial communication of the present invention, during a period until completion of the initialization in step S4, the engine controller 150 is required to transmit a status with use of the /STS .signal 173 only when the engine controller 150 receives the /CMD signal 172 from the printer controller 103. Accordingly, as is apparent, the number of communication operations during the initialization in step S4 can be reduced as compared with the conventional configuration.

As a matter of course, since the printer controller 103 must determine the status of the print engine 104 even during the period until the initialization in step S4 ends, a command requesting a status from the engine controller 150 is issued at a predetermined interval. However, since the piece of information that the printer controller 130 needs to determine is whether or not the initialization has been completed, no problem arises in lengthening the interval at which the status request command is issued as compared with the conventional configuration. Thus, also in this respect, the number of serial communication operations during this period can be reduced as compared with the conventional configuration.

Subsequently, when the initialization has been completed, the printer controller 103 still serves as the master; meanwhile, the engine controller 150 changes from the slave mode into the quasi-master mode. When a change in a predetermined status occurs, the engine controller 150 spontaneously transmits the thus-changed status to the printer controller 103 as a spontaneous status. Therefore, also on this respect, the number of serial communication operations can be reduced.

More specifically, according to the configuration disclosed in Japanese Patent Publication No. 9-277667A, when a status changes, there are required two communication operations constituted of an issuance of a status request command from the printer controller 103 to the engine controller 150, and transmission of the status from the engine controller 150 to the printer controller 103. However, according to the serial communication of the present invention, only one communication operation; that is, an issuance of the spontaneous statuses from the engine controller 150, is required. Thus, as is apparent, the number of communication operations is reduced.

Meanwhile, the serial communication after completion of the initialization can be referred to as serial communication in a master/master mode. However, since the engine controller 150 is not in a completely equal relationship with the printer controller 103, when a command is issued from the printer controller 103, the engine controller 150 still must return a status in response to the command. At this time, the engine controller 150 serves as a slave. For this reason, this status is called the quasi-master mode.

Heretofore, serial communication between the printer controller 103 and the engine controller 150 has been described. Next, schematic descriptions on commands and status will be provided.

Each of the commands is of an 8-bit configuration, and each of the 8 bits is effective. Accordingly, binary data can also be transmitted with use of the command signal. Meanwhile, when the activation sequence in step S2 of Fig. 2 has been completed and serial communication is enabled, the printer controller 103 issues a command at a predetermined interval. Thereafter, transmission of a command, after the engine controller 150 is recognized to have entered the quasi-master mode, is carried out by burst transfer.

Meanwhile, in practice, when a command is transmitted, a start bit is appended to the head of the command; and a bit for use in a parity check and a stop bit are appended to the end of the command. However, in the embodiment, descriptions on data bits will be provided. The same applies to the response status and the spontaneous statuses, which will be described hereinbelow.

As described above, there are provided commands constituted of the execution command for instructing some action to the engine controller 150, and the acquisition command which is issued for obtaining a desired status from the engine controller 150. Examples of the execution command include a print-start command for instructing start of printing; a color-type command for specifying either color printing or monochrome printing; a print-type command for designating either single-sided printing or double-sided printing; a paper-type command for designating a type of printing paper; a paper feeding command for designating a paper feeding tray; a patch command for instructing performance of patch calibration; and a cartridge-replacement command for instructing which color toner cartridge is to be replaced. Meanwhile, the patch calibration referred to here is processing for performing calibration of a γ-characteristic of the printer controller 103 by forming a patch (test image) of a toner image at a given portion of a photosensitive member, thereby performing colormetry of the same. However, since this patch calibration is well-known, detailed descriptions thereof are omitted.

Examples of the acquisition command include a basic status command for acquiring a basic status which will be described later; a count command for acquiring the number of ejected sheets in printing; an abnormality command for, when an abnormal condition has occurred and a call for a user or a service technician is required, acquiring detailed information of the call (operator call, service call, etc.); an engine request command for, when a request is issued from the engine controller 150, acquiring specifics of the request; a preparation command for acquiring, when the print engine 104 is undergoing preparation, specifics of the preparation; an alarm command for, when the engine controller 150 is issuing an alarm, acquiring specifics of the alarm; a residual amount command for acquiring a volume of remaining toner in each of the toner cartridges; and so on. Therefore, by issuing an acquisition command to the engine controller 150 at a desired time, the printer controller 103 can determine a desired status.

As described above, a variety of commands are provided as the execution command and the acquisition command, respectively. A respective intrinsic code is assigned to each of the execution command and the acquisition command. The engine controller 150 is configured so as to be capable of identifying a received command on the basis of the code of the command.

Next, the statuses will be described. As described above, the status comes in the response status which, upon receipt of an execution command or an acquisition command from the printer controller 103, is to be returned to the printer controller 103 as a response to the command; and the spontaneous statuses which are transmitted from the engine controller 150 to the printer controller 103 spontaneously when the engine controller 150 detects a change in a predetermined status after transmission of the previous response status or of the previous spontaneous status.

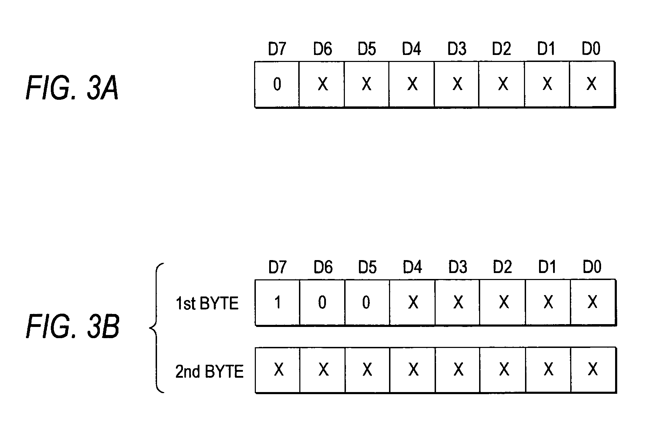

Fig. 3A illustrates an example bit configuration of the response status; and Fig. 3B illustrates the same of the spontaneous status. In this embodiment, the response status is an 8-bit signal as illustrated in Fig. 3A; and bit 7 (D7), which is the most significant bit thereof, is set to "O." "0" of this bit 7 serves as an ID code indicating that this status is a response status. Then, data pertaining to an actual status are written in bit 6 (D6) through bit 0 (DO). Meanwhile, in Fig. 3A, "X" in each of bit 6 through bit 0 represents "0" or "1." The same also applies to Fig. 3B.

Meanwhile, as described above, the command comes in the execution command and the acquisition command. Essential requirements for the engine controller 150 in response to an acquisition command are: to set bit 7 to "0"; to write into bit 6 through bit 0 data pertaining to the status requested by the acquisition command; and to transmit the same to the printer controller 103 as a response status. Since the printer controller 103 recognizes transmission of the acquisition command, the printer controller 103 can recognize that the response status which is received immediately thereafter is a response command to the preceding acquisition command.

In addition, in the above-described sequence in serial communication, upon receipt of a command, the engine controller 150 must return a response status. Here, a focus is placed on what kind of response is to be returned in response to receipt of an execution command. In this embodiment, the engine controller 150 is defined so as to return a basic status, which will be described later, in response to the execution command.

Fig. 3B illustrates an example bit configuration of the spontaneous status. In the embodiment, the spontaneous status is constituted of two bytes; and the higher-order three bits constituted of bit 7 through bit 5 in the first byte are set to "100." This serves as an ID code which indicates that the status is a spontaneous status. In addition, in the lower-order five bits constituted of bit 4 through bit 0 in the first byte, there are written a status attribute which represents the kind of status data written in the second byte. Then, into the eight bits in the second byte, data pertaining to the status are written. This spontaneous status is transmitted by burst transfer.

Determination as to what status is to be defined as the spontaneous status can be made arbitrarily; and in the embodiment, there are defined six statuses constituted of: paper count data; command disable data; paper feeding data; cartridge data; residual toner data; and the basic status.

The paper count data are data for indicating how many sheets have been ejected during printing. More specifically, when printing is performed, sheets of paper on which images are formed are ejected. This corresponds to a status change in the print engine 104. Accordingly, the engine controller 150 counts the number of ejected sheets during printing, and notifies the printer controller 103 of the ejected number of sheets as a spontaneous status. By receiving the paper count data, the printer controller 103 can recognize whether or not printing of an instructed number of sheets has been performed,

The command disable data are data for notifying the printer controller 103 that an execution command cannot be executed even upon receipt thereof. More specifically, in some occasions, some cause brings about a situation that an execution command cannot be executed even upon receipt thereof. In such a case, the printer controller 103 must be notified thereof. Accordingly, when the engine controller 150 detects occurrence of a situation where an execution command cannot be executed even when the command is received, the engine controller 150 transmits the command disable data as a spontaneous status.

The paper feeding data are data for indicating that a paper feeding cassette is not attached. The cartridge data are data for indicating that a toner cartridge is not installed. The residual toner data are data for indicating a remaining amount of toner in a toner cartridge.

Accordingly, upon detection of removal of the paper feeding cassette from the main body of the LBP 102, the engine controller 150 transmits the paper feeding data as a spontaneous status, thereby notifying the printer controller 103 of the paper feeding cassette not being installed. In addition, upon detection of removal of a toner cartridge from the main body of the LBP 102, the engine controller 150 transmits the cartridge data as a spontaneous status, thereby notifying the printer controller 103 of the toner cartridge not being installed. Further, when the remaining amount of toner in a toner cartridge changes due to printing, or the like, the engine controller 150 transmits the residual toner data as a spontaneous status, thereby notifying the printer controller 103 of the remaining amount of toner in the toner cartridge.

Next, the basic status will be described. Statuses of the print engine 104 include a variety of statuses other than the above-described paper count data; the command disable data; the paper feeding data; the cartridge data; and the residual toner data. For instance, the status of open/close of a cover of the main body of the LBP 102 can be regarded as a status. In addition, paper jam can also be regarded as a status. Furthermore, the condition of waste toner can also be regarded as a status.

Accordingly, in the embodiment, these variety of statuses are organized by related items into a hierarchical structure; and a status in the top level is defined as the basic status. Fig. 4 illustrates an example of the hierarchical structure.

In Fig. 4, first, statuses are organized into six roughly-classified statuses constituted of a call status; a sleep status; a preparation status; an engine request status; an alarm status; a printing status; and a print disable status, which are defined as the basic statuses. Therefore, the basic status can be described as summarizing the status of the print engine 104.

Meanwhile, each of "0" to "7" in the basic status represents a bit. More specifically, as described above, the basic status has an 8-bit configuration. Bit 7 is set to "0" at all times. In addition, when a status illustrated in the drawing is "true," the bit corresponding to the status is set to "1," and when the same is "false," the bit is set to "0." Accordingly, when some alarm is present, bit 4 of the basic status is set to "1." The same also applies hereinbelow.

The call status is a status indicating that an abnormal condition, or the like, has occurred, and recovery therefrom requires involvement of an operator (a user) or a service technician. For instance, when a paper jam occurs, removal of the jammed paper by an operator is required; and when a paper feeding cassette becomes empty, paper supply by an operator is required. Thus, an item of the call is provided in the basic status for notifying the printer controller 103 whether or not involvement of an operator, or the like, is required. When involvement of an operator, or the like, is required, bit 0 of the basic status becomes "1," and when the same is not required, this bit becomes "0."

Meanwhile, upon occurrence of an abnormal condition, in some cases, the abnormal condition can be recovered through involvement by an operator; however, in other cases, the same requires involvement of a service technician. Accordingly, in this embodiment, in a subordinate level of the call status which is the basic status, a call substatus is provided as a status indicating what involvement is required for recovery from the abnormal condition. As illustrated in the drawing, in the embodiment, three statuses constituted of an operator call status, a controller call status, and a service call status are provided as the call substatus. In Fig. 4, the operator call status is assigned to bit 4, the controller call status is assigned to bit 5, and the service call status is assigned to bit 6. However, as a matter of course, the calls may be assigned to other bits.

Furthermore, as a subordinate level of the operator call substatus, seven lower-level statuses (paper size error, etc.) are provided as shown in Fig. 4. As is apparent, each of these abnormal conditions can be recovered through involvement of an operator.

Similarly, as a subordinate level of the service call substatus, seven statuses lower-level statuses (download error, etc.) are provided. As is apparent, recovery from each of these abnormal conditions requires involvement of a service technician.

Meanwhile, a controller call substatus is provided in the call status; and in a subordinate level thereof, four lower-level statuses are provided. The controller call status is an abnormal condition which can be resolved through involvement of the printer controller 103. For instance, in Fig. 4, a paper empty status is provided in bit 6 of the controller call substatus. This status is established in a situation where paper of a single size is stored in two paper feeding cassettes, and where printing is performed with paper being supplied from one of the paper feeding cassettes, there are some cases where the paper feeding cassette becomes empty. In such a case, by causing the printer controller 103 to provide an instruction to use another paper feeding cassette, printing can be continued. Therefore, in this case, the engine controller 150 sets this bit (bit 6) to "1." Thus, the controller call status is a status for the engine controller 150 to ask the printer controller 150 for assistance.

As described above, the call statuses of the basic status are organized into a hierarchical structure; and when a certain bit of a status in a subordinate level becomes "1," the value of "1" of the bit is also reflected in its superior statuses. For instance, when a cover is opened, bit 4 in the operator call substatus is set to "1." As a result of this setting, bit 4 in the call substatus which is in a superior level thereto is set to "1," whereby bit 0 of the basic status is set to "1." A situation where the call status bit of the basic status is set to "0" is only when the bits of the operator-call substatus, those of the controller substatus, and those of the service call status, which are statuses in the lowest level of the call status, are all set to "0." The same also applies to the relationships between respective bit values of a subordinate level and a superior level of each of the other statuses.

Here, returning to the basic status, the descriptions will be continued. The sleep status represented by bit 1 of the basic status is a status indicating whether or not the print engine 104 is under a power-saving mode for reducing consumption of unnecessary electric power.

The preparation status is a status indicating whether or not the print engine 104 is in a preparation mode (warm-up operation, etc.). In a subordinate level of the preparation status, a preparation substatus indicating a reason why the print engine 104 is in preparation is provided. An initialization substatus is assigned to bit 5 of this preparation substatus, and bit 5 of this status is set to "1" during initialization of step S4 illustrated in Fig. 2. As the result, during initialization of step S4 in Fig. 2, bit 2 of the basic status is set to "1."

The engine request status is a status indicating whether or not the engine controller 150 is issuing some request to the printer controller 103. In a subordinate level of the engine request substatus, an engine request substatus which indicates a specific reason for the request is provided. For instance, when a determination is made that a timing for performing the above-described patch calibration has come on the basis of a predetermined condition, the engine controller 150 sets bit 6 of the engine request substatus to "1." As the result, bit 3 of the basis status is set to "1."

Meanwhile, as is apparent, the engine controller 150 cannot perform a patch calibration arbitrarily. This is because data pertaining to the γ-characteristic belong to the printer controller 103. A determination can be arbitrarily made as to when to perform a patch calibration. However, there can be employed such a configuration that patch calibration is to be performed when, e.g., the number of printed copies has reached a given value, or when remaining toner in a toner cartridge is lowered to a certain level.

The alarm status is a status indicating whether or not some alarm is present. In the lower level of the alarm status, an alarm substatus indicating the specifics of the alarm is provided. For instance, upon detection of the waste toner being full, the engine controller 150 sets bit 2 of the alarm substatus to "1," and, in addition, sets bit 4 of the basic status, which is in the superior level of the alarm substatus, to "1."

The printing status is a status indicating whether or not printing is currently being performed. When printing is being performed, bit 5 of the basic status is set to "1"; and when the same is not being performed, the same bit is set to "0."

The print disable status is a status indicating whether or not printing is enabled. In this embodiment, when three conditions constituted of a no-call condition (i.e., bit 0 of the basic status is "0"); a not-sleeping condition (i.e., bit 1 of the basic status is "0"); and a not-preparation condition (i.e., bit 2 of the basic status is "0") are simultaneously satisfied, the condition is defined as being a condition where printing can be started. In a situation where printing is not enabled, bit 6 of the basic status is set to "1"; and in a situation where printing is enabled, the bit is "0."

Hitherto, the six statuses which are defined to be transmitted as spontaneous statuses have been described. The reason for defining the above-described six statuses as statuses transmitted as spontaneous statuses is as follows. First, the printer controller 103 does not necessarily determine all the statuses of the print engine 104. In practice, determining whether or not printing is enabled is usually sufficient.

Therefore, in the embodiment, the above-described six statuses are to be transmitted as spontaneous statuses; and when a change occurs in any one of statuses included in these six statuses, statuses including the thus-changed status are transmitted to the printer controller 103 as spontaneous statuses. When specifics of the change are required upon receipt of the spontaneous statuses, the printer controller 103 may issue an acquisition command.

In addition, since all the above-described six statuses are configured so as to have an 8-bit configuration, a time period required for serial communication can also be reduced.

Meanwhile, in the above-mentioned descriptions by reference to Fig. 2, operations simply denoted as "issue command" or "transmit spontaneous status," and the like, are employed. However, further detailed descriptions are as follows.

First, when the respective activation sequences (steps S2 and S3) of the printer controller 103 and the engine controller 150 have been completed and serial communication is enabled, the printer controller 103 serves as the master, and transmits a command at a predetermined interval. Examples of a command to be transmitted at this time include the acquisition command for requiring the preparation substatus. In response to the command, the engine controller 150 returns the preparation substatus illustrated in Fig. 4 as a response status. When bit 5 of the preparation substatus is "1," the printer controller 103 can determine that the initialization has not yet been completed; and when the same is "0," the printer controller 103 can determine that the initialization has been completed.

As described above, it is important for the printer controller 103 to determine whether or not initialization in the print engine 104 has been completed during serial communication in the master/slave mode in which the printer controller 103 serves as the master and the engine controller 150 serves as the slave. As described above, the reason therefor is that when the initialization has been completed, the quasi-master mode of the engine controller 150 is established, and termination of the serial communication in the master/slave mode which has been performed until then is required.

Next, when the initialization of step S4 in Fig. 2 has been completed, the engine controller 150 transmits all the spontaneous statuses in step S5. All the spontaneous statuses referred to here are the six statuses constituted of the above-described paper count data; the command disable data; the paper feeding data; the cartridge data; the residual toner data; and the basic status. Upon receipt thereof, the printer controller 103 sets a condition defined by these statuses as an initial condition of the print engine 104.

As described above, when the engine controller 150 receives an execution command from the printer controller 103 after having transmitted all the spontaneous statuses in step S5 of Fig. 2, the engine controller 150 returns a basic status as a response status. In addition, in a case of receiving an acquisition command, the engine controller 150 returns requested data to the printer controller 103 as a response status.

In addition, after all the spontaneous statuses have been transmitted in step S5 of Fig. 2, when any change occurs in a status included in the spontaneous statuses, the engine controller 150 transmits the changed status as a spontaneous status. For instance, when printing is performed upon receipt of the print command, the number of ejected sheets and a remaining amount of toner in a toner cartridge change. Accordingly, the engine controller 150 transmits to the printer controller 103 the paper count data and the residual toner data as spontaneous statuses.

By virtue of having the above configuration, the image forming apparatus according to the present invention can reduce the number of communication operations between the printer controller 103 and the engine controller 150 as compared with the related-art apparatus. In addition, since each of the commands has a 1-byte configuration, and the spontaneous statuses have a 2-byte configuration in total, which is small in the number of bits, a time period required for a single communication operation can be reduced.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. An image forming apparatus adapted to be connected with an external device, comprising:
a printer controller, operable to convert image data received from the external device into image information;
a print engine, adapted to perform printing on a printing medium; and
an engine controller, operable to cause the print engine to perform the printing in accordance with the image information, and to communicate data regarding a status of the print engine with the print controller by a serial communication, wherein:
the printer controller and the engine controller perform an activation sequence including an operation for stabilizing circuits provided therein;
the engine controller performs an initializing operation for placing the print engine in a printable condition after the completion of the activation sequence;
the printer controller periodically transmits first data inquiring the status of the print engine to the engine controller during the initializing operation;
the engine controller is configured to transmit second data indicating the status of the print engine to the printer controller in response to the first data; and
the engine controller is configured to spontaneously transmit third data indicating that a change is occurred in the status of the print engine to the printer controller after the completion of the initializing operation.

2. The image forming apparatus as set forth in claim 1, wherein the engine controller is configured to spontaneously transmit the second data to the printer controller when the initializing operation is completed.

3. The image forming apparatus as set forth in claim 1, wherein the printer controller is configured to arbitrarily transmit the first data to the engine controller after the completion of the initializing operation.
